**Europäisches Patentamt**

**European Patent Office**

**Office européen des brevets**

(19)

(11) Publication number:

**0 040 890**
**A1**

# (12) EUROPEAN PATENT APPLICATION

(21) Application number: **81200560.1**

(22) Date of filing: **22.05.81**

(51) Int. Cl.³: **F 28 D 9/00**

(30) Priority: **22.05.80 NL 8002973**

(43) Date of publication of application: **02.12.81**
**Bulletin 81/48**

(84) Designated Contracting States: **AT BE CH DE FR GB LI NL SE**

(71) Applicant: **Könings, Aernoud Rudolf, No. 13, Primulastraat, NL-7151 GR Eibergen (NL)**

(72) Inventor: **Könings, Aernoud Rudolf, No. 13, Primulastraat, NL-7151 GR Eibergen (NL)**

(74) Representative: **Cammel, Willem Frans et al, OCTROOIBUREAU ARNOLD & SIEDSMA No. 1, Sweelinckplein, NL-2517 GK The Hague (NL)**

(54) **Device for the treatment of a fluid and method for manufacturing the same.**

(57) The invention relates to a method of making a device for treating a fluid, comprising a number of chambers (26) arranged in a row, each being adapted to have a flow (29) of fluid passing therethrough and each being separated from the other by a screen (25), the said method comprising the zig-zag folding of a substantially continuous web of material and arranging spacer elements (23, 24) defining an inlet and outlet aperture (27, 28) for a chamber, between each two adjacent portions (25) of the web of material forming the screens, whereby the spacer elements form the edge boundaries of the chamber and the web of material is folded around the spacer elements. The invention also relates to a device made according to the above method.

ACTORUM AG

A device for treating a fluid and a method
of making the same.

This invention relates to a method of making a
device for treating a fluid, comprising a number of chambers
arranged in a row, each being adapted to have a flow of fluid
passing therethrough and each being separated from the other
by a screen, the said method comprising the zig-zag folding
of a substantially continuous web of material and arranging
spacer elements defining an inlet and outlet aperture for a
chamber, between each two adjacent portions of the web of
material forming the screens.

A device made by such a method is known from French
patent specification No. 1 592 524, in which the zig-zag
folded web of material forms the load-bearing structure of
the device. The material must therefore be of a minimum
thickness to guarantee a sufficiently stiff structure.

The object of this invention is to provide a method
of the kind referred to whereby it is possible to produce a
device in which the thickness of the web of material is not
restricted to a certain minimum in such a way.

BAD ORIGINAL

To this end, according to the invention, the spacer elements form the edge boundaries of the chamber and the web of material is folded around the spacer elements. In this way the spacer elements form the load-bearing structure so that the web of material may be very thin.

The invention also relates to a device made according to the method, which device is provided with baffles on the spacer elements, said baffles defining a long flow path to be covered by the fluid between the inlet opening and the outlet opening, the baffles in adjoining chambers each extending over the same distance adjacent one another. This gives optimum contact between the fluids.

Further features and advantages of the invention will be apparent from the following description of a number of exemplified embodiments with reference to the accompanying drawings.

Fig. 1 is a perspective view of a device according to the invention used as a heat-exchanger.

Fig. 2 is an exploded perspective view of the device of Fig. 1, with parts partially broken away.

Fig. 3 is a diagrammatic cross-section through the device shown in Figs. 1 and 2 seen in the direction of arrows III-III in Fig. 2.

Fig. 4 is a similar diagrammatic section to Fig. 3 showing a device according to the invention used as a filter and

Fig. 5 shows an alternative embodiment.

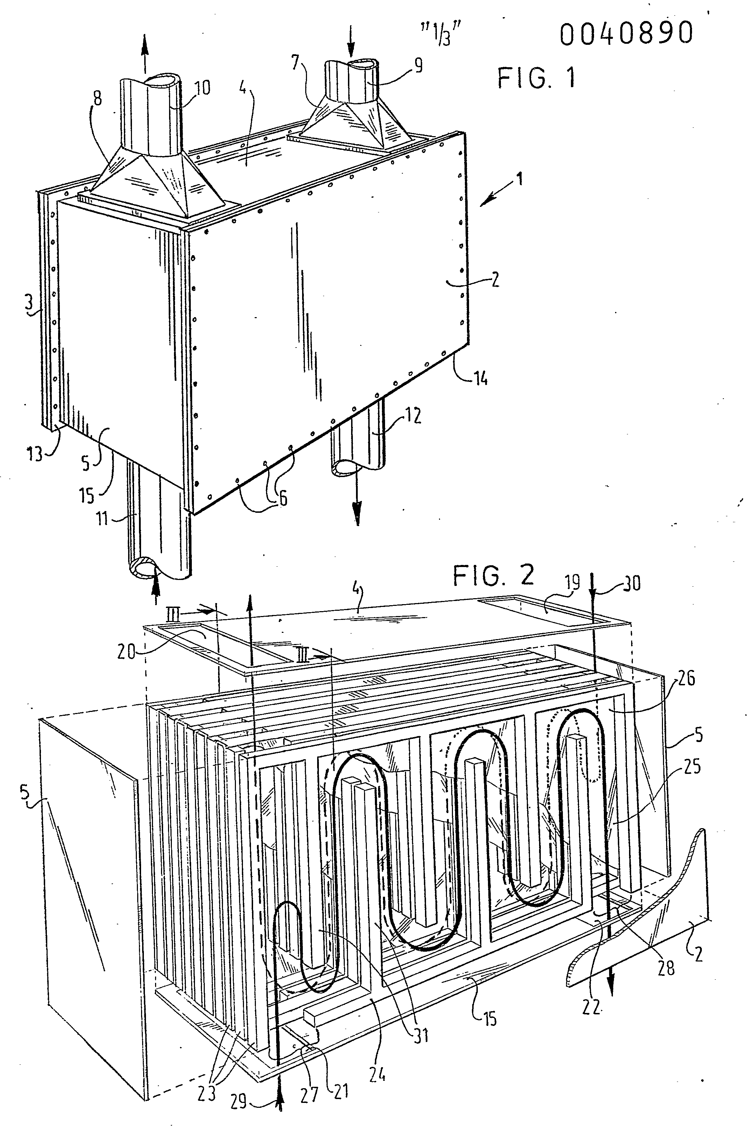

The device 1 shown in Fig. 1 comprises a housing 14 with fluid conduits 9-12 connected thereto. Housing 14 has walls provided with flanges 13, i.e. a top wall 4, side walls 5 and a bottom wall 15. The flanges 13 extend perpendicularly to the walls. A front wall 2 and a back wall 3 are fitted to these flanges 13 by fixing means 6, e.g. bolts and nuts or possibly rivets.

Top wall 4 is formed with apertures so that an inlet conduit 9 and an outlet conduit 10 for cooling fluid communicate with the interior of the housing 14 respectively via an inlet spigot 7 and an outlet spigot 8, each connected

BAD ORIGINAL

respectively to the associated conduit and to the top walls 4. Spigots 7, 8 provide a uniform transition from the shape of the cross-section of the conduits 9, 10 to the shape of the apertures in the top wall 4. The transition is from the circular to the rectangular in the embodiment illustrated.

An inlet conduit 11 and an outlet conduit 12 for fluid requiring to be cooled are similarly connected at the bottom of the housing 14 by spigots (not shown) to apertures in the bottom wall 15, and hence the interior of the housing 14. Where this specification refers to a fluid requiring to be cooled it denotes a heat-yielding fluid while the term "cooling fluid" denotes a heat-receiving fluid.

Fig. 2 shows the interior of the device according to Fig. 1. A number of flat chambers or ducts 26 are formed in planes parallel to the front wall 2. At the sides parallel to the front wall 2 chambers 26 are bounded by screens 25. The edge boundaries are formed by spacer elements 23 and 24 in contact with a screen 25 on each side. An inlet aperture 27 and an outlet aperture 28 are left free between the spacer elements 23 and 24 opposite the inlet and outlet apertures respectively in the top wall 4 and the bottom wall 15. Chamers 26 communicate alternately with the apertures 19, 20 in the top wall 4 and the apertures 21, 22 in the bottom wall 15. Fluid requiring to be cooled and cooling fluid thus flows alternately through the chambers 26, heat-exchange taking place via the screens 25 therebetween. An arrow 29 in Fig. 2 denotes the flow of fluid for cooling in respect of a chamber 26, while the arrow 30 denotes the flow of cooling fluid in respect of an adjacent chamber 26.

According to the invention, all the screens of the device 1 are formed by a web of material extending zig-zag fashion. When the device according to the invention is used as a heat-exchanger as described hereinbefore, this web of material comprises a heat-permeable layer, e.g. metal foil or a sufficiently thin layer of material which is a poor thermal conductor. The thinner the layer, the lower the heat resistance and hence the better the efficiency of the device.

If there is an appreciable pressure difference between the fluids, there is a risk of the web of material tearing. In that case, according to the invention, filler members (not shown) can be disposed in the chambers subject to the lowest pressure, such fillers allowing fluid to pass and preferably being porous. These fillers support the thin web of material forming the screens.

As will be seen from Fig. 2, baffles 31 may be formed on the spacer elements 23, 24 to lengthen the flow path of the fluids through the chambers 26, and thus provide better surface efficiency. .

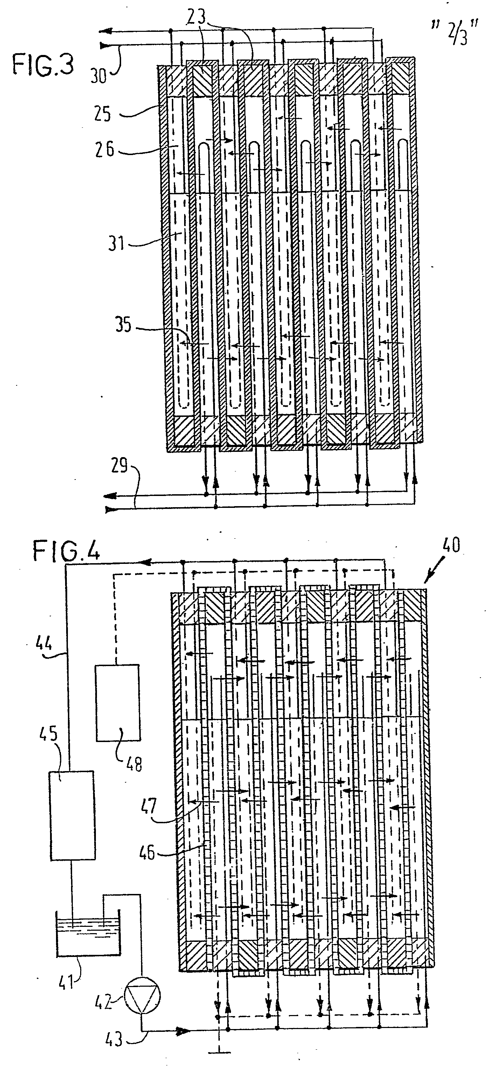

The arrangement of the alternate chambers is clearly shown in the diagram of Fig. 3. The fluid for cooling flowing through the chambers 26 as shown by the arrow 29 gives up its heat, through the screens 25 formed by the continuous web of material (see arrow 35), to the cooling fluid flowing in the direction of arrow 30 through the other chambers 26. Both the cooling fuid and the fluid for cooling may be liquid or gaseous.

Fig. 4 shows the device 40 used as a filter, i.e. a liquid filter in this example. The contaminated liquid is pumped by pump 42 from a reservoir 41 into a delivery conduit 43 leading to device 40. In this embodiment the screens 46 are formed by a continuous web of filter material. The contaminated liquid moves in the direction of arrows 47 through the filter material, the impurities remaining behind, and then to the outlet conduit 44 which conveys the filtered liquid to a device 45 which uses the liquid and contaminates it in so doing. The liquid goes back to the reservoir 41 from the device 45.

A washing device 48 can readily be combined with the device 40 for connection to the apertures in the chambers which are not used by the liquid flowing in the circuit described above. When the screens are highly contaminated, the impurities can be washed out of the filter by switching on the washing device 48, so that there is a reverse flow of liquid through the filter material. In another embodiment this can also be achieved by reversing the pumping direction.

A third use of a device according to the invention

BAD ORIGINAL

(not shown) is as an air humidifier. In that case the screens are formed by a web of moisture-absorbing material, e.g. blotting paper or card. This material is moistened by means of a pumping system, or is allowed to absorb the moisture itself by partial immersion in a reservoir. If air is now pumped through the device it absorbs moisture as it passes along or moves through the screens.

The spigots 7, 8 may be so constructed as to enable a number of chambers to be connected in series. Apart from countercurrent heat-exchange as illustrated, co-current heat-exhange is also possible.

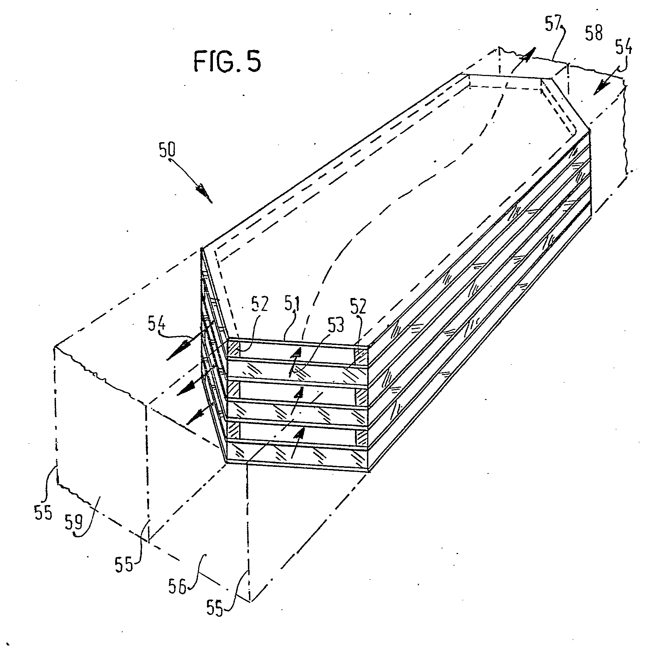

The device 50 shown in Fig. 5 comprises spacer elements 52 which are all identical. Here too the web of material 51 is folded around the spacer elements 52 and forms chambers for two fluids alternately. One fluid flows in the direction of arrow 53 to an output aperture 57 from an inlet aperture 56 defined by diagrammatically illustrated baffles 55. The other fluid flows in the direction of arrow 54 from the preceding inlet 58 to the outlet 59. The fluid may also move in co-current as in the previously described embodiments.

BAD ORIGIN

- 1 -

# C L A I M S

1. A method of making a device for treating a fluid, comprising a number of chambers arranged in a row, each being adapted to have a flow of fluid passing therethrough and each being separated from the other by a screen, the said method comprising the zig-zag folding of a substantially continuous web of material and arranging spacer elements defining an inlet and outlet aperture for a chamber, between each two adjacent portions of the web of material forming the screens, characterised in that the spacer elements form the edge boundaries of the chamber and the web of material is folded around the spacer elements.

2. A device made according to the method of claim 1, characterised by baffles on the spacer elements, said baffles defining a long flow path to be covered by the fluid between the inlet opening and the outlet opening, the baffles in adjoining chambers each extending over the same distance adjacent one another.

BAD ORIGINAL

FIG. 1

FIG. 2

**FIG.3**

**FIG.4**

FIG. 5

# EUROPEAN SEARCH REPORT

European Patent Office

00040890

Application number

EP 81 20 0560

## DOCUMENTS CONSIDERED TO BE RELEVANT

| Category | Citation of document with indication, where appropriate, of relevant passages | Relevant to claim |
|---|---|---|
| D,X | FR - A - 1 592 524 (COMP. GEN. D'ELECTRICITE)<br><br>* the whole document *<br><br>-- | 1,2 |
| | US - A - 2 953 110 (ETHERIDGE)<br><br>* the whole document *<br><br>-- | 1,2 |
| | GB - A - 846 994 (DAVEY PAXMAN)<br><br>* page 1, lignes 70-77; figures *<br><br>-- | 1 |
| A | DE - A - 2 826 343 (NORDSTJERNAN) | 1 |
| A | US - A - 3 734 177 (BELLOVARY)<br><br>------ | 1 |

### CLASSIFICATION OF THE APPLICATION (Int. Cl.³)

F 28 D 9/00

### TECHNICAL FIELDS SEARCHED (Int. Cl.³)

F 28 D
F 28 F

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 02-09-1981 | SCHOUFOUR |

EPO Form 1503.1  06.78